# EUROPÄISCHE PATENTANMELDUNG

(11) **EP 2 604 840 A1**
(43) Veröffentlichungstag der Anmeldung: **19.06.2013**
(21) Anmeldenummer: 11400059.9
(22) Anmeldetag: 16.12.2011
(51) Int. Cl.: F02K 9/46, F02K 9/50, F02K 9/56, F04B 15/06

(54) **Förder-Aggregat für kryogene Flüssigkeiten**

(71) Anmelder: Astrium GmbH, 82024 Taufkirchen (DE)
(72) Erfinder: Schwarting, Walter, 26127 Oldenburg (DE)
(74) Vertreter: Hansmann, Dierk

(57) **Zusammenfassung**

Ein Förder-Aggregat dient der Versorgung von Lageregelungs-Triebwerken für Raumfahrzeuge, die mit reagierenden Gasen betrieben werden, bei denen es sich um Dämpfe von tiefkalt gelagerten Flüssiggasen, vorzugsweise um Flüssig-Wasserstoff (LH2) und Flüssig-Sauerstoff (LOX), handelt. Für jedes der Flüssiggase ist eine flüssigkeit-fördernde Kolbenpumpe vorgesehen, bei der im Schöpfraum in der Nähe des unteren Totpunktes der Bewegung des Kolbens ein Anschluß angeordnet ist, der durch die Bewegung des Kolbens freigegeben wird und der mit Unterdruck beaufschlagt wird. Bei einer Kombination eines pneumatischen Kolbenantriebes mit zwei Pumpenköpfen ist es möglich, gleichzeitig sowohl Wasserstoff als auch Sauerstoff zu fördern.

## Beschreibung

Die Erfindung betrifft ein Förder-Aggregat für kryogene Flüssiggase zur Versorgung eines Triebwerks, insbesondere eines Lageregelungs-Triebwerks für Raumfahrzeuge.

Zur Lageregelung von Raketenstufen, Raumfahrzeugen oder Satelliten unter Schwerelosigkeit werden vorwiegend Kleintriebwerke eingesetzt, die entweder mit einem Kaltgas oder mit zwei flüssigen Treibstoffen betrieben werden. Diese bekannten Treibwerke werden auch als Mono-Propellant- bzw. Bi-Propellant-Triebwerk bezeichnet. Bei Vorhandensein kryogen gelagerter Gase ist immer dann der Einsatz gasförmig betriebener Zweistoff-Triebwerke mit Verbrennung sinnvoll, wenn hohe Impulse gefordert sind. Hierzu muß die Versorgung mit beiden Treibstoffen sowohl bezüglich des Gasdrucks als auch hinsichtlich des individuellen Massenflusses derart gewährleistet sein, daß jederzeit eine in etwa stöchimetrisch geregelte Zufuhr der beiden reaktiven Treibstoffe erfolgt. Flüssig gelagerte Kaltgase mit einem Gleichgewichts-Partialdruck, d.h. einem Druck am Siedepunkt von ca. 1 bis 2 bar liegen in ihrem jeweiligen Lagertank zumeist bei relativ niedrigen Absolut-Drücken von 3 bis 4 bar vor; demgegenüber werden bei gasversorgten Triebwerken Versorgungsdrücke im Bereich von etwa 10 bar und mehr benötigt. Aufgrund eines unvermeidbaren Wärmezustromes aus der Umgebung der Tanks befinden sich kryogen gelagerte Gase ständig an ihrem Siedepunkt, ihr thermodynamischer Zustand wird sogar noch ständig angehoben, d.h., ihre Temperatur und ihr Gleichgewichtsdruck steigen ständig. Dies ist der Grund, weshalb kryogene Treibstoffe in Form von Flüssiggasen ohne eine aktive Zusatzkühlung als Ausgleich für diesen Wärmezustrom nicht lagerfähig sind.

Ein Gas-Triebwerk, das mit Dämpfen von tiefkalt gelagertem Flüssiggas, wie z.B. Flüssig-Wasserstoff (LH2) und Flüssig-Sauerstoff (LOX), betrieben werden soll, stellt besondere Anforderungen an den thermodynamischen Zustand der verwendeten Brenngase. So müssen die beiden miteinander reagierenden Gaskomponenten in jeweils kontrollierter Menge, d.h. mit einem definierten Massenstrom und bei ausreichend hohem Druck, zugeführt werden, um den geforderten Schub zu erreichen. Für ein als 'reduzierend' einzustellendes Mischungsverhältnis von Brennstoff zu Oxidator ist es beispielsweise notwendig, den primär geregelten Massenstrom des Brenngases Wasserstoff mit einem definierten, z.B. leicht unter-stöchimetrisch geregelten Massenstrom des Oxidators Sauerstoff zu mischen.

Daraus ergeben sich für ein Förder-Aggregat für ein Triebwerk der eingangs genannten Art insbesondere die folgenden Anforderungen:
- Aus dem Lagerungstank-Druck muß für beide Gase durch gleichzeitige Druck- und nachfolgende Energieerhöhung ein erhöhter Druck 'trockenen' Gases, d.h. abseits der Dampfdruckkurve des jeweiligen Gases, erzeugt werden.
- Um zu vermeiden, daß ein Gas in Form von Dampf mit kondensierter Phase, also als Feucht-Dampf nahe dem thermodynamischen Dampfdruck-Gleichgewicht entsteht und eine stark fluktuierende Gasdichte besitzt, muß gegenüber dem Ausgangszustand die der verdampften Stoffmenge entsprechende Verdampfungswärme plus der wegen der Temperaturerhöhung notwendigen Wärmemenge, die der Erhöhung der Wärmekapazität entspricht, zugeführt werden.

Wenn sich Dampf in der Nähe seines Siedepunktes, d.h. nahe seiner Dampfdruckkurve, befindet, so kondensiert er im Falle einer Förderung durch Kompression im gleichen Moment wieder zu Flüssigkeit, so daß eine kontrollierte Förderung mittels Kompressoren oder anderen gasfördernden Pumpen nicht möglich ist. Der Pumpen-Wirkungsgrad wäre zudem deswegen extrem gering, da abhängig vom jeweiligen Pumpentyp nur sehr wenig oder gar kein Kondensat gefördert werden könnte. Bei herkömmlichen flüssigkeits-fördernden Pumpen kommt es im Moment des Ansaugens von siedendem, also nicht unterkühltem Flüssiggas, d.h. Gas, das sich nahe seiner Dampfdruck-Kurve befindet, häufig zu Kavitation. Dabei erfolgt eine spontane Verdampfung des Flüssiggases in den Schöpfraum einer ansaugenden Pumpstufe, da im Moment des Ansaugens die siedende Flüssigkeit durch das Unterschreiten ihres Gleichgewichts-Dampfdruckes spontan verdampft, so daß lediglich Dampf in den Schöpfraum der Pumpe gesogen wird. Eine nachfolgende Kompression des Dampfes führt dann zu einer erneuten Kondensation des Dampfes mit dem Ergebnis der Bildung einer nunmehr sehr geringen Flüssigkeitsmenge im Schöpfraum und entsprechend dem unsicheren Volumen-Ausstoß zu einem nur geringen oder gar keinem geförderten Massenstrom. Bei Rotationspumpen und bei Turbinen führt dieser zyklische verdampfungs-Kondensations-Vorgang zu Kavitationsschlägen in den rotierenden Verdichterstufen, und bei Kolbenpumpen zu einer Verdampfung-Kondensations-Oszillation. Lediglich bei Membranpumpen mit Elastomermembranen, deren Schöpfraum am oberen Totpunkt durch Formschluss extrem klein wird, kann ein geringer Teil der gebildeten Kondensatmenge ausgestoßen und somit zum Ausgang der Pumpstufe gefördert werden.

Bei rotierenden Pumpaggregaten würde ein Inertgas-Vordruck zwar einen vorübergehenden Abstand des thermodynamischen Zustands von der Dampfdruckkurve erzeugen und somit das Kavitationsrisiko verringern, dieser kann aber wegen Wärme-Einstromes mit der Konsequenz des Ablassens von Überdruck und des Verlustes des Druckgases im Falle einer über längere Zeit dauernden Mission nicht zu jedem gewünschten Zeitpunkt gewährleistet werden. Zudem sollten rotierende Pumpen in Raumfahrzeugen unbedingt vermieden werden, da eine Lagestabilisierung rotierender Achsen zu navigatorischen Problemen führen kann.

Aufgabe der Erfindung ist es, ein Förder-Aggregat der eingangs genannten Art bereitzustellen, bei dem bei jedem gefordertem Massenstrom eine Regelung mit einem vorgebbaren stöchiometrischen Mengen-Verhältnis der verwendeten Brenngas-Mischung ermöglicht wird.

Die Erfindung löst diese Aufgabe durch ein Förder-Aggregat mit den kennzeichnenden Merkmalen des Patentanspruchs 1. Dabei ist erfindungsgemäß vorgesehen, daß auf einer Antriebsachse für jedes der Flüssiggase je eine flüssigkeit-fördernde Kolbenpumpe betrieben wird, bei der in der Nähe des unteren Totpunktes der Kolbenbewegung ein Anschluß an eine Unterdruck-Quelle angeordnet ist. Dieser UnterdruckAnschluß erzeugt im Moment seiner Öffnung, d.h., sobald er durch den Kolben freigegeben wird, eine Druckabsenkung im Kolben- bzw. Schöpfraum. Die Druckabsenkung führt zwar einerseits zu einer Verdampfung, andererseits aber zu einem erhöhten Differenzdruck gegenüber der Eingangsseite, so daß die Flüssigkeit, von diesem Differenzdruck getrieben in beschleunigter Weise in den Schöpfraum eintritt. Somit wird durch diesen Unterdruck der Kolben- bzw. Schöpfraum im Moment der Ansaugung des Flüssiggases, d.h. im Ansaug-Takt, praktisch vollständig mit Flüssigkeit gefüllt. Der entstehende Unterdruck, der abhängig ist vom Leitungsquerschnitt und damit der Drosselung sowie von der Leitungslänge, ist dabei so gewählt, daß er hinreichend unterhalb des Lagerungs-Druckes der Flüssiggase liegt. Unter Weltraumbedingungen erfolgt die Evakuierung mittels einer in vorteilhafter Weiterbildung einstellbaren Drossel gegen das umgebende Vakuum.

Der Antrieb für die erfindungsgemäß vorgesehenen flüssigkeits-fördernden Kolbenpumpen kann mit einfacher oder mit mehrfacher Kolbenfläche (a) erfolgen, um die Kraft (F) zu vergrößern, die aus dem Druck (p) und der Arbeit des Arbeitsgases (p x V) auf einen Kolben gemäß p = F/a; F = p x a freigesetzt wird. Die Flüssigkeits-Pumpen nach der Erfindung können antriebsseitig entweder einfach oder doppeltwirkend ausgelegt sein; wichtig aber ist, daß sie als lediglich einstufige Kolbenpumpen wirken, da Flüssigkeiten inkompressibel sind und somit eine weitere serielle Stufe zur Druckerhöhung ausschließen.

Bei einem doppelt wirkendem Antrieb mit zwei Pumpenköpfen wirkt ein doppeltwirkender Antriebs-Kolben auf zwei sich gegenüberliegende Pumpenköpfe, wobei es folgende Möglichkeit gibt, die beiden Pumpenköpfe zu nutzen:
- eine Parallel-Schaltung, um das Fördervolumen für ein Medium zu verdoppeln,
- die getrennte Parallel-Förderung zweier Medien, wobei die Pumpenköpfe entweder mit gleichem oder unterschiedlichem Pumpenkolben-Querschnitt ausgestattet sind, um die verschiedenen Medien, im bevorzugten Fall LH2 und LOX, parallel in einer vorgegebenen Volumen-Relation zu fördern und um dabei gleiche bzw. unterschiedliche erhöhte Drücke zu erzeugen.

Die mechanische Auslegung der Flüssigkeits-Pumpen ist antriebsseitig und pumpenseitig entsprechend dem geforderten Massenstrom des jeweilig zu fördernden Gases sowie dem geforderten maximalen Druck gewählt. Sofern durch eine Kombination eines pneumatischen Kolben-Antriebes mit zwei Pumpenköpfen gleichzeitig sowohl Wasserstoff als auch Sauerstoff gefördert wird, ist eine thermische Entkopplung der wärmeren Sauerstoffseite (ca. 90K) gegenüber der kalten Wasserstoff-Seite (ca. 20 K) vorgesehen, die über eine thermisch isolierende Kolbenstange zwischen dem Antriebskolben und dem sauerstoffseitigen Pumpenkolben erfolgt, woraus sich ein Temperaturgradient von 20 K des Wasserstoffdampfs auf ca. 55 K, dem Gefrierpunkt des unterkühlten Flüssig-Sauerstoffs (LOX), ergibt. Wird beim Fördern in einem der Pumpenköpfe der vorgegebene Enddruck erreicht, so führt ein in weiterer Ausgestaltung der Erfindung vorgesehenes Überströmventil die überschüssig geförderte Menge auf die jeweilige Ansaugseite zurück, ohne daß die Pumpe vorher in ein Kraftgleichgewicht läuft und stehen bleibt.

Da nur ein trockener Dampf mit eindeutig definierter Gasdichte zu einer kontrollierten, korrekten Triebwerksversorgung geeignet ist, ist das erfindungsgemäße Förder-Aggregat so ausgelegt, daß die geförderten Flüssiggas-Mengen verdampft werden und auf einen thermodynamischen Zustand oberhalb des Enddrucks gebracht werden. Daher ist in weiterer Ausgestaltung des erfindungsgemäßen Förder-Aggregates zusätzlich vorgesehen, daß dem zu geförderten Flüssiggas nachträglich, d.h. nachgeschaltet, über einen Wärmeaustauscher eine dem neuen, energetisch angehobenen Gaszustand entsprechende Wärmemenge zugeführt und sein Druck dadurch auf einen maximal definierten Enddruck erhöht wird und somit ein entsprechender thermischer Abstand von dem neuen thermodynamischen Gleichgewichts-Zustand erzeugt wird.

Ausgehend von flüssig gelagerten, tiefkalten Gasen, d.h. dem Brennstoff LH2 und dem Oxidator LOX, erfolgt mit dem erfindungsgemäßen Förder-Aggregat über eine kavitationsfreie Förderung der Flüssiggase unter Druckerhöhung auf einen geforderten Versorgungsdruck eine anschließende Verdampfung auf einen thermodynamisch erhöhten Zustand oberhalb der Dampfdruckkurven zur Bereitstellung kondensatfreier trockener Gase.

Die Vorteile des Triebwerkes nach der Erfindung sind vielfältig. Dazu gehören die Vermeidung von elektrischen Antrieben, insbesondere von Rotationsantrieben, wie beispielsweise Kreiselpumpen oder Turbinen. Weiterhin bestehen sie in der Ausnutzung einer vorhandenen, permanent verdampfenden Dampfmenge aus den Lagertanks der Flüssiggase, vorzugsweise des permanent siedenden Wasserstoffs, und des im Dampf und in der Flüssigkeit enthaltenen Anteils der Arbeit W ( W ≈ p x V), die aus dem Differenzdruck gegen das Umgebungs-Vakuum freigesetzt wird, eine einfache, gegebenenfalls gleichzeitige Förderung beider Flüssiggase LH2 und LOX, die Einhaltung eines vorgegebenen oder variablen Förder-Verhältnisses und das garantierte Erreichen der Enddrücke. Ferner ist das Förder-Aggregat nach der Erfindung über eine Betätigung des Ventils für das Arbeitsgas bei Nicht-Bedarf abschaltbar, dabei einfriersicher und vermeidet durch Überströmventile Stillstände bei einem Dauerbetrieb.

Daher besteht der Antrieb für die erfindungsgemäß vorgesehenen flüssigkeits-fördernden Kolbenpumpen entweder aus einem linearen elektromechanischen Antrieb oder aus einem linear laufenden pneumatischen Kolbenmotor, der mit dem Gas-Differenzdruck aus der Druckdifferenz zwischen dem Tankdruck des Flüssiggases und dem Weltraum-Umgebungsvakuum betrieben wird. Als Antriebsgas unter Tieftemperatur-Bedingungen ist dabei neben Druck-Helium nur der Dampf eines siedenden Flüssiggases geeignet. Hierbei ist in vorteilhafter Weiterbildung des erfindungsgemäßen Förderaggregats eine Anordnung vorgesehen, die tiefkaltes Wasserstoffgas bei einer Temperatur von 20K als Arbeitsgas für den Antrieb einer Pumpstufe zur Förderung von Flüssig-Sauerstoff, dessen Tripelpunkt bei 54,34 liegt, ermöglicht.

Bei einer linear angetriebenen Flüssigkeits-Kolbenpumpe können zudem große Massenströme bei erhöhtem Druck erzeugt werden, die nach Wärmezufuhr zu großen Gas-Flüssen führen.

Nachfolgend soll das Förder-Aggregat gemäß der Erfindung anhand eines in der Zeichnung dargestellten Ausführungsbeispiels näher erläutert werden. Es zeigen:
- Fig. 1: den prinzipiellen Aufbau einer flüssigkeits-fördernden Kolbenpumpe für ein gasbetriebenes Zweistoff-Lageregelungstriebwerk in schematischer Darstellung und
- Fig. 2: eine schematische Darstellung eines gasbetriebenen Zweistoff-Lageregelungstriebwerks.

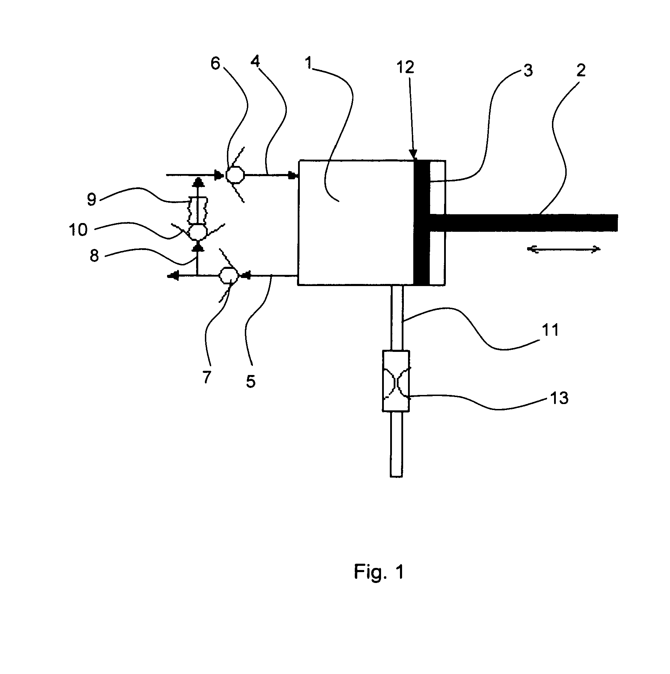

Fig. 1 zeigt in schematischer Darstellung den prinzipiellen Aufbau einer flüssigkeits-fördernden Kolbenpumpe für ein gasbetriebenes Zweistoff-Lageregelungstriebwerk für Raumfahrzeuge auf der Basis kryogener Flüssiggase, die aus Flüssig-Wasserstoff (LH2) und Flüssig-Sauerstoff (LOX) erhalten werden. Zur Förderung eines flüssigen Kaltgases, dessen thermodynamischer Zustand sich auf oder in der Nähe seiner Dampfdruckkurve befindet, wird wenigstens eine in der Figur dargestellte flüssigkeit-fördernde Kolbenpumpe verwendet, mit einem primären, d.h. saugseitig liegenden Schöpf- oder Kolbenraum 1 und einem über eine Pleuelstange 2 beaufschlagten Kolben 3. Der Schöpf- oder Kolbenraum 1 weist je eine von einem in der Zeichnung nicht dargestellten Vorratstank mit einer in diesem angeordneten Treibstoff-Handhabungseinrichtung (PMD) kommende Zuführleitung 4 sowie eine zu einem in der Zeichnung ebenfalls nicht dargestellten Druckspeicher führende Leitung 5 auf. Beide Leitungen sind jeweils mit wenigstens einem Überströmventil 6 bzw. 7 ausgestattet. Außerdem sind die beiden Leitungen 4 und 5 über eine Rückführleitung 8 mit einer Überström-Druck-Reguliereinheit 9 und einem weiteren Überströmventil 10 miteinander verbunden. Schließlich ist der Schöpf- oder Kolbenraum 1 mit einem Anschluß 11 versehen, der im Bereich des unteren Totpunktes 12 des Kolbens 3 angeordnet ist und dessen Öffnung durch die Bewegung des Kolbens 3 freigegeben wird. Der Anschluß 11 ist mit einer in der Zeichnung nicht dargestellten Unterdruck-Quelle verbunden und mit einer einstellbaren Drossel 13 versehen.

Die Wirkungsweise der vorangehend beschriebenen Anordnung ist dabei wie folgt: Während der Flugphase des mit dem vorangehend beschriebenen Förder-Aggregat ausgestatteten Raumflugkörpers wird der Lagerungs-Druck des kryogenen Arbeitsgases (vorzugsweise wasserstoffseitig) im Dampfraum des Lagertanks erfaßt und als Arbeitsgas über ein Ventil der Antriebsseite der pneumatisch betriebenen Förderpumpe zugeführt. Die Arbeit des Gases erfolgt differentiell gegen das Umgebungsvakuum. Die Pumpe beginnt daraufhin mit der Förderung. Der Anschluß 11, der über die Drossel 13 mit dem Vakuum der Umgebung verbunden ist, ermöglicht aufgrund des nun hohen Differenzdruckes zwischen dem Druck der Flüssigkeit und dem im Schöpf- oder Kolbenraum 1 herrschenden Unterdruck einen beschleunigten Flüssigkeits-Zustrom. Die Flüssigkeit wird dem Tank entnommen und vom Kolben 3 der Förderpumpe über einen in der Figur nicht dargestellten Wärmetauscher als trockener Dampf, d.h. frei von jeglichem Kondensat, in einen Gasspeicher-Tank gedrückt. Da der Antrieb permanent oszilliert, werden die Flüssigkeitsmengen entsprechend der Antriebs-Frequenz und des jeweiligen Pumpen-Schöpf-Volumens bis zum eingestellten Maximaldruck des Überströmventils 10 gefördert.

Mit einer Antriebsstufe kann bei einem Parallel-Betrieb entweder das Schöpfvolumen eines geförderten Flüssiggases verdoppelt werden oder es wird bei der Parallel-Förderung zweier Flüssigkeiten das Kolbenflächenverhältnis, beispielsweise einem stöchiometrischen Fördermengen-Verhältnis entsprechend ausgelegt. Eine solche gemischte Pumpen-Anordnung arbeitet auf jeder Seite einstufig gegen den jeweils aktuellen Druck bis hin zum maximalen Tank-Druck, der durch das jeweilige Überströmventil 10 vorgegeben wird. Um einen Variations-Bereich benötigter Gasmengen für verschiedene Brenngas-Gemisch-Einstellungen abdecken zu können, ist die Auslegung auf die maximal erforderliche Wasserstoff-Gasmenge vorgesehen, während überschüssig geförderte Mengen Sauerstoffs auf die Ansaugseite zurückgeführt werden.

Für die Förderung von LOX wird eine thermische Isolation der Kolbenstange 2 zwischen dem mit Wasserstoffdampf bei LH2-Temperatur angetriebenen Antriebs-Kolben und den Sauerstoff fördernden Pumpenkolben vorgesehen, da sonst die Möglichkeit bestünde, daß insbesondere bei einem Stillstand der Pumpe Sauerstoff im Pumpenkopf gefriert. Optional kann dies auch mittels einer elektrischen Heizung am sauerstoffseitigen Ende der isolierend aufgebauten Kolbenstange 2 verhindert werden, was insbesondere im Stillstand vor Einfrieren schützen kann.

Um zu vermeiden, daß einseitige, unerlaubte Überdruck-Verhältnisse in den Speicher-Tanks auftreten, wird überschüssig geförderte Flüssigkeit beider Gase über das Überströmventil 10 auf die jeweilige Saugseite zurückgeführt. Somit ist eine dauernde Förderung bei einem Maximaldruck gewährleistet, solange Arbeitsgas angeboten wird.

Jeder Flüssigkeitsstrom wird ausgangsseitig auf dem Weg zu einem Speicher-Druckbehälter durch einen Wärmetauscher geleitet, um dem geförderten Flüssiggas Verdampfungswärme zuzuführen und so den Zustand einer reinen Dampfphase zu gewährleisten.

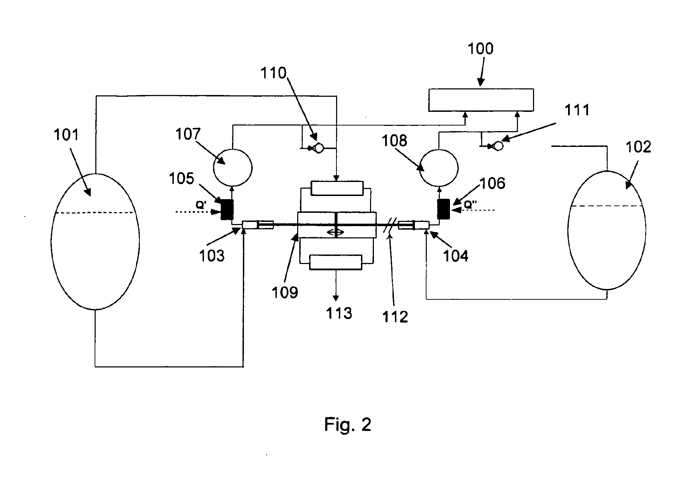

Fig. 2 zeigt in schematischer Darstellung eine Anordnung, bei der zwei der vorangehend beschriebenen Förder-Aggregate zur Versorgung eines gasbetriebenen Zweistoff-Lageregelungstriebwerks 100 mit gasförmigen Treibstoffen dienen.

Für den Betrieb des Lageregelungstriebwerks 100 sind je ein Lagertank 101 für flüssigen Wasserstoff und ein Lagertank 102 für flüssigen Sauerstoff vorgesehen. Über Förder-Aggregate 103 und 104 werden diese jeweils über einen Wärmetauscher 105, 106 einem zugeordneten Speicher-Druckbehälter 107, 108 zugeführt. Der Antrieb der Förder-Aggregate 103 und 104 erfolgt mittels einer Antriebsvorrichtung 109 mit entsprechenden Steuerungseinrichtungen. Vervollständigt wird die Anordnung durch zwei Check-Ventile 110, 111 sowie durch eine Thermal-Entkopplung, die zwischen der Antriebsvorrichtung 109 und dem Förder-Aggregat 104 für den flüssigen Sauerstoff vorgesehen ist. Schließlich ist die Anordnung mit dem umgebenden Vakuum 113 verbunden.

## Patentansprüche

1. Förder-Aggregat für kryogene Flüssiggase zur Versorgung eines Triebwerks, insbesondere eines Lageregelungs-Triebwerks für Raumfahrzeuge, das mit gasförmigen Treibstoffen betrieben wird, **dadurch gekennzeichnet, daß** für jedes der Flüssiggase eine flüssigkeit-fördernde Kolbenpumpe vorgesehen ist, bei der in der Nähe des unteren Totpunktes (12) der Bewegung des Kolbens (3) ein Anschluß (11) vorgesehen ist, der durch die Bewegung des Kolbens (3) freigebbar und mit Unterdruck beaufschlagbar ist.

2. Förder-Aggregat nach Anspruch 1, **dadurch gekennzeichnet, daß** zwischen einer von einem Vorratstank in einen Schöpfraum (1) der Kolbenpumpe führenden Zuführleitung (4) und einer von diesem Schöpfraum (1) zu einem Druckspeicher führenden Leitung (5) eine Rückführleitung (8) mit einem Überströmventil (10) angeordnet ist.

3. Förder-Aggregat nach Anspruch 3, **dadurch gekennzeichnet, daß** zusätzlich ein Wärmeaustauscher vorgesehen ist.

4. Förder-Aggregat nach einem der Ansprüche 1 bis 3, **dadurch gekennzeichnet, daß** eine Kombination eines pneumatischen Kolbenantriebes mit zwei Pumpenköpfen vorgesehen ist, über die gleichzeitig sowohl Wasserstoff als auch Sauerstoff förderbar ist.

5. Förder-Aggregat nach einem der Ansprüche 1 bis 4, **dadurch gekennzeichnet, daß** es mit einem elektrischen Linearantrieb antreibbar ist.

6. Förder-Aggregat nach einem der Ansprüche 1 bis 4, **dadurch gekennzeichnet, daß** es mit Dampfdruck der Lagertanks kryogener Gase mittels eines linear laufenden Kolbenmotors antreibbar ist.

7. Förder-Aggregat nach Anspruch 4, **dadurch gekennzeichnet, daß** zwischen einer von einem Vorratstank in einen Schöpfraum (1) der Kolbenpumpe führenden Zuführleitung (4) und einer von diesem Schöpfraum (1) zu einem Druckspeicher führenden Leitung (5) eine Rückführleitung (8) mit einem Überströmventil (10) angeordnet ist.

8. Förder-Aggregat nach Anspruch 6, **dadurch gekennzeichnet, daß** zusätzlich ein Wärmeaustauscher vorgesehen ist.

9. Förder-Aggregat nach einem der Ansprüche 1 bis 6, **dadurch gekennzeichnet, daß** eine Kombination eines pneumatischen Kolbenantriebes mit zwei Pumpenköpfen vorgesehen ist, über die gleichzeitig sowohl Wasserstoff als auch Sauerstoff förderbar ist.
